# EUROPEAN PATENT APPLICATION

(11) **EP 2 858 435 A1**
(43) Date of publication of application: **08.04.2015**
(21) Application number: 12878133.3
(22) Date of filing: 31.05.2012
(51) Int. Cl.: H04W 72/04, H04W 92/18

(54) **WIRELESS COMMUNICATION SYSTEM, WIRELESS BASE STATION DEVICE, TERMINAL DEVICE, AND METHOD FOR ALLOCATING WIRELESS RESOURCES**

(71) Applicant: FUJITSU LIMITED, Kawasaki-shi Kanagawa 211-8588 (JP)
(72) Inventor: TANAKA Yoshinori, Kawasaki-shi Kanagawa 211-8588 (JP)
(74) Representative: Fenlon, Christine Lesley
(86) International application number: PCT/JP2012/064234
(87) International publication number: WO 2013/179472

(57) **Abstract**

A radio communication system includes a first and second radio base station apparatuses; and a first to third terminal apparatuses, wherein the first radio base station apparatus includes a radio resource control unit configured to allocate to the first terminal apparatus a second radio resource, in contrast to a first radio resource allocated when the first terminal apparatus performs first radio communication via the first radio base station apparatus, when the first terminal apparatus performs second radio communication with the second terminal apparatus not via the first radio base station apparatus, and a first transmission unit configured to transmit allocation information of the second radio resource to the first terminal apparatus, and the second radio resource is same as or partially overlapped with a third radio resource allocated, by the second radio base station apparatus, when the third terminal apparatus performs the second radio communication.

## Description

### TECHNICAL FIELD

The embodiments discussed herein are related to a radio communication system, a radio base station apparatus, a terminal apparatus, and a radio resource allocation method.

### BACKGROUND ART

At present, a radio mobile communication system such as a mobile telephone system and a wireless LAN (Local Area Network) is widely used. In the field of radio communication, continuous discussion on next-generation communication technology is going on to further improve communication speed and communication capacity. For example, in the 3GPP (3rd Generation Partnership Project) which is an association for standardization, the standardization of a communication standard called LTE (Long Term Evolution) and an LTE-based communication standard called LTE-A (LTE-Advances) has been completed or is currently under study.

In such a radio communication field, there is a technique called Device to Device communication (which may hereafter be referred to as "D2D communication"). The D2D communication is a radio communication technique to perform direct communication between terminals without via a base station.

In the 3GPP also, active discussions are going on about the mechanism of achieving the D2D communication. For example, in regard to a frequency channel to be used for the D2D communication, the 3GPP is discussing the use of the same frequency channel as a frequency channel used when a base station communicates with a terminal.

However, when a frequency channel used for the D2D communication is the same as a frequency channel used for radio communication between the base station and the terminal (which may hereafter be referred to as "base station-terminal communication"), interference may occur between the D2D communication and the base station-terminal communication.

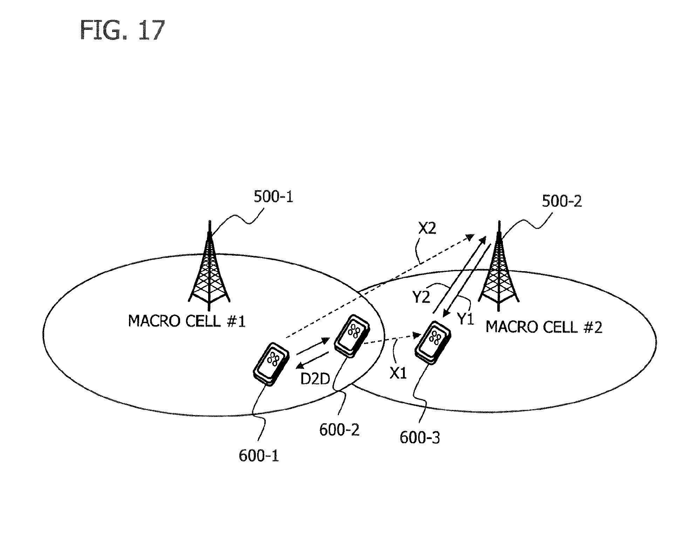

FIG. 17 is a diagram illustrating an example of the occurrence of interference between the above two types of communication.

In the example depicted in FIG. 17, two terminals 600-1, 600-2 is performing the D2D communication across the service area ranges of two base stations 100-1, 100-2. Also, a terminal 600-3 is performing radio communication between with a base station 500-2.

In the above case, the terminal 600-3 may receive a radio signal transmitted from the base station 500-2 (Y1 in FIG. 17), and also may receive a radio signal transmitted from the terminal 600-2 to the terminal 600-1 (X1 in FIG. 17).

When a frequency channel used for radio communication from the terminal 600-2 to the terminal 600-1 is the same as a frequency channel used for radio communication from the base station 500-2 to the terminal 600-3, two signals (for example, X1 and Y1) produces interference with each other.

Similarly, consider such a case that a frequency channel used for radio communication from the terminal 600-1 to the terminal 600-2 is the same as a frequency channel used for radio communication from the terminal 600-3 to the base station 500-2. In this case, when the base station 500-2 receives a radio signal (for example, X2 in FIG. 17) transmitted from the terminal 600-1, the above radio signal and a radio signal (for example, Y2 in FIG. 17) transmitted from the terminal 600-3 interfere with each other.

In regard to such an interference problem, there is an on-going discussion in the 3GPP that a base station schedules a radio resource for D2D communication.

### CITATION LIST

### NON-PATENT LITERATURE

Non-patent literature 1: 3GPP TS 36.211 V10.4.0 (2011-12)
Non-patent literature 2: 3GPP TS 36.212 V10.5.0 (2012-3)
Non-patent literature 3: 3GPP TS 36.213 V10.5.0 (2012-3)
Non-patent literature 4: 3GPP TS 36.214 V10.1.0 (2012-3)
Non-patent literature 5: 3GPP RP-120417

### SUMMARY OF INVENTION

### PROBLEMS TO BE SOLVED BY THE INVENTION

However, when a base station schedules a radio resource for D2D communication, a terminal comes to perform D2D communication within the service area of the base station. In this case, the D2D communication is disabled when the terminal performing the D2D communication moves to the outside of the service area of the base station.

Also, when the base station schedules the radio resource for the D2D communication, there may be a case that the base station has to perform complicated processing for the radio resource scheduling. The reason is that the base station performs scheduling in consideration of both radio resource allocation for the D2D communication in which the self-station is not involved and radio resource allocation to a subordinate terminal.

Accordingly, it is an object in one aspect of the invention (embodiment) to provide a radio communication system, a radio base station apparatus, a terminal apparatus, and a radio resource allocation method, configured to avoid interference.

It is another object in one aspect of the invention to provide a radio communication system, a radio base station apparatus, a terminal apparatus, and a radio resource allocation method, enabling the terminal apparatus to perform D2D communication irrespective of whether or not the terminal apparatus is existent within the service area of the radio base station apparatus.

It is still another object in one aspect of the invention to provide a radio communication system, a radio base station apparatus, a terminal apparatus, and a radio resource allocation method, enabling D2D communication without complicated processing.

### MEANS FOR SOLVING THE PROBLEMS

According to an aspect of the embodiments, a radio communication system includes a first and second radio base station apparatuses; and a first to third terminal apparatuses, wherein the first radio base station apparatus includes a radio resource control unit configured to allocate to the first terminal apparatus a second radio resource, in contrast to a first radio resource allocated when the first terminal apparatus performs first radio communication via the first radio base station apparatus, when the first terminal apparatus performs second radio communication with the second terminal apparatus not via the first radio base station apparatus, and a first transmission unit configured to transmit allocation information of the second radio resource to the first terminal apparatus, the first terminal apparatus includes a reception unit configured to receive the allocation information from the first radio base station apparatus, and the second radio resource is same as or partially overlapped with a third radio resource allocated, by the second radio base station apparatus, when the third terminal apparatus performs the second radio communication.

### ADVANTAGEOUS EFFECTS OF THE INVENTION

By the invention, it is possible to provide a radio communication system, a radio base station apparatus, a terminal apparatus, and a radio resource allocation method, configured to avoid interference. Furthermore, by the invention, it is possible to provide a radio communication system, a radio base station apparatus, a terminal apparatus, and a radio resource allocation method, enabling the terminal apparatus to perform D2D communication irrespective of whether or not the terminal apparatus is existent within the service area of the radio base station apparatus. And, by the invention, it is possible to provide a radio communication system, a radio base station apparatus, a terminal apparatus, and a radio resource allocation method, enabling D2D communication without complicated processing.

### BRIEF DESCRIPTION OF DRAWINGS

FIG. 1 is a diagram illustrating a configuration example of a radio communication system.
FIG. 2 is a diagram illustrating a configuration example of a radio communication system.
FIG. 3 is a diagram illustrating a configuration example of a radio base station apparatus.
FIG. 4 is a diagram illustrating a configuration example of a terminal apparatus.
FIG. 5 is a flowchart illustrating an operation example in a radio base station apparatus.
FIGS. 6A and 6B are diagrams illustrating examples of radio resource allocation.
FIGS. 7A and 7B are diagrams illustrating examples of radio resource allocation.
FIGS. 8A-8D are diagrams illustrating examples of radio resource allocation.
FIG. 9 is a diagram illustrating an example of the range of radio resource allocation.
FIGS. 10A-10C are diagrams illustrating examples of radio resource allocation.
FIGS. 11A and 11B are diagrams illustrating examples of radio resource allocation for default.
FIG. 12 is a sequence diagram illustrating an operation example of a radio communication system.
FIG. 13 is a flowchart illustrating an operation example of an access control method.
FIG. 14 is a diagram illustrating an example of radio resource allocation.
FIG. 15 is a diagram illustrating an example of radio resource allocation.
FIG. 16 is a diagram illustrating a configuration example of a radio communication system.
FIG. 17 is a diagram for explaining an example of interference.

### DESCRIPTION OF EMBODIMENTS

Hereinafter, the present embodiments will be described in detail by reference to the drawings.

### [First embodiment]

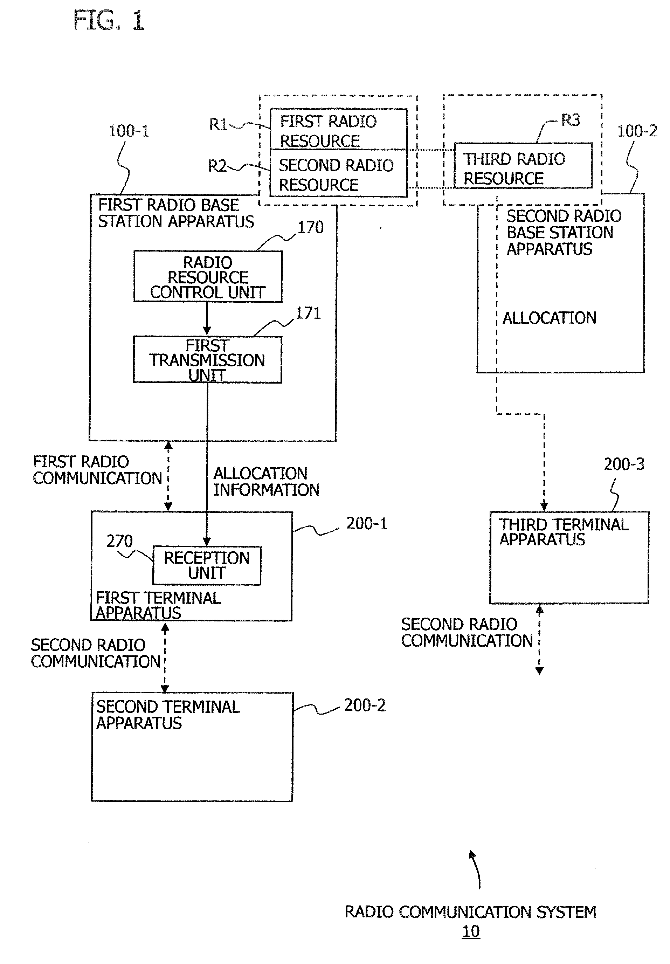

FIG. 1 is a diagram illustrating a configuration example of a radio communication system 10 according to a first embodiment. The radio communication system 10 includes a first and a second radio base station apparatus 100-1, 100-2 and a first to a third terminal apparatus 200-1 to 200-3. For example, the first terminal apparatus 200-1 and the second terminal apparatus 200-2 are located in the service area of the first radio base station apparatus 100-1, and the third terminal apparatus 200-3 is located in the service area of the second radio base station apparatus 100-2.

The first terminal apparatus 200-1 and the second terminal apparatus 200-2 may perform radio communication with each other without via the first radio base station apparatus 100-1. Further, the third terminal apparatus 200-3 may also perform radio communication without via the second radio base station apparatus 100-2. The first and second terminal apparatuses 200-1, 200-2 may also perform radio communication with the first radio base station apparatus 100-1, and the third terminal apparatus 200-3 may perform radio communication with the second radio base station apparatus 100-2.

The first radio base station apparatus 100-1 includes a radio resource control unit 170 and a first transmission unit 171.

When the first terminal apparatus 200-1 performs radio communication with the second terminal apparatus 200-2 without via the first radio base station apparatus 100-1, the radio resource control unit 170 allocates a second radio resource R2 to the first terminal apparatus 200-1, as contrasted to a first radio resource R1 allocated thereto when the first terminal apparatus 200-1 performs first radio communication via the first radio base station apparatus 100-1.

The first transmission unit 171 transmits the allocation information of the second radio resource R2 to the first terminal apparatus 200-1.

The first terminal apparatus 200-1 includes a reception unit 270 for receiving the allocation information of the second radio resource R2.

Here, in regard to the second radio resource R2 allocated by the radio resource control unit 170, the second radio resource R2 is the same as or partially overlapped with a third radio resource R3 that is allocated by the second radio base station apparatus 100-2 to the third terminal apparatus 200-3 to perform second radio communication.

For example, when the second radio resource R2 is the same as the third radio resource R3, a radio resource that the first radio base station apparatus 100-1 allocates to the first terminal apparatus 200-1 becomes the same as a radio resource that the second radio base station apparatus 100-2 allocates to the third terminal apparatus 200-3.

Accordingly, the radio resource used in base station-terminal communication between the second radio base station apparatus 100-2 and the third terminal apparatus 200-3 becomes different from the radio resource used by the first terminal apparatus 200-1 in the second radio communication.

Therefore, with such radio resource allocation, it is possible to prevent mutual interference of radio signal and avoid interference between the second radio communication in the first terminal apparatus 200-1 and the base station-terminal communication in the second radio base station apparatus 100-2.

On the other hand, when the second radio resource R2 is partially overlapped with the third radio resource R3, in regard to the overlapped part, it is possible to avoid interference between the two types of communication, as described above.

In the above case, in regard to radio resources that are not overlapped, for example, the first radio base station apparatus 100-1 allocates the second radio resource R2 to the first terminal apparatus 200-1 as a radio resource to perform the second radio communication when a distance from the first terminal apparatus 200-1 is smaller than and including a threshold. When the distance between the first radio base station apparatus 100-1 and the first terminal apparatus 200-1 is the threshold or smaller, a radio signal transmitted from the first terminal apparatus 200-1 does not reach the second radio base station apparatus 100-2, if the first terminal apparatus 200-1 performs the second radio communication with the second terminal apparatus 200-2.

Accordingly, in the above case also, it is possible to prevent mutual interference of radio signals and avoid interference between the second radio communication in the first terminal apparatus 200-1 and base station-terminal communication in the second radio base station apparatus 100-2.

Thus, it is possible to avoid interference if, for example, the first radio base station apparatus 100-1 allocates the second radio resource R2 in such a manner that the second radio resource R2 is the same as or partially overlapped with the third radio resource R3.

Also, when the first terminal apparatus 200-1 performs second radio communication outside the service area range of the first radio base station apparatus 100-1, the first radio base station apparatus 100-1 allocates a radio resource within the first radio resource R1 or the second radio resource R2 to perform the second radio communication.

When the first terminal apparatus 200-1 moves outside the service area range of the first radio base station apparatus 100-1, it is possible to avoid interference by using the above radio resource to perform the second radio communication. For example, when the first terminal apparatus 200-1 moves outside the service area range of the first radio base station apparatus 100-1, a radio signal transmitted from the first terminal apparatus 200-1 does not reach the first radio base station apparatus 100-1. Accordingly, it is possible to avoid interference between the base station-terminal communication in the first radio base station apparatus 100-1 and the second radio communication in the first terminal apparatus 200-1.

Further, at the allocation of the second radio resource R2, the first radio base station apparatus 100-1 and the first terminal apparatus 200-1 do not perform the exchange of a control signal. Therefore, as compared to the case of processing in the first radio base station apparatus 100-1 and the first terminal apparatus 200-1 by the exchange of control signal, the first radio base station apparatus 100-1 and the first terminal apparatus 200-1 may perform the second radio communication without complicated processing because of not performing such processing.

### [Second embodiment]

Next, a second embodiment will be described.

### <Configuration example of radio communication system>

First, a configuration example of a radio communication system according to the second embodiment will be described.

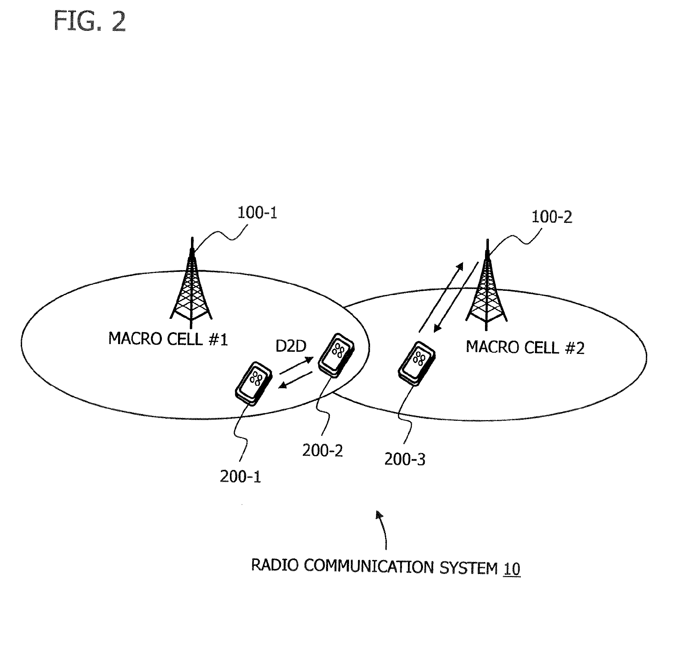

FIG. 2 is a diagram illustrating the configuration example of a radio communication system 10 according to the second embodiment. The radio communication system 10 includes base station apparatuses (which may hereafter be referred to as "base stations") 100-1, 100-2 and terminal apparatuses (which may hereafter be referred to as "terminals") 200-1 to 200-3.

The base stations 100-1, 100-2 are radio communication apparatuses that are radio connected to the terminals 200-1 to 200-3 to perform radio communication. Further, the base stations 100-1, 100-2 may provide a variety of services, such as voice communication and video distribution, to the terminals 200-1 to 200-3 in one or a plurality of cell ranges. Also, the base stations 100-1, 100-2 allocate radio resources for use when the terminals 200-1 to 200-3 perform D2D communication. The details thereof will be described later.

The terminals 200-1 to 200-3 are radio communication apparatuses that are respectively radio connected to the base stations 100-1, 100-2 to perform radio communication. Also, the terminals 200-1 to 200-3 may perform D2D communication with one another. The terminals 200-1 to 200-3 are, for example, mobile telephone units, information mobile terminal apparatuses, and the like.

In the example depicted in FIG. 2, the two terminals 200-1, 200-2 perform D2D communication, while the terminal 200-3 performs radio communication with the base station 100-2. Here, the terminals 200-1, 200-2 performing the D2D communication may also perform radio communication with each base station 100-1, 100-2 in the service area (or communication range) of each base station 100-1, 100-2. Further, the terminal 200-3 may perform D2D communication with other terminals 200-1, 200-2.

Additionally, there are notations of "Macro cell #1" and "Macro cell #2" in FIG. 2, and the "Macro cell #1" and the "Macro cell #2" may be referred to as the base station 100-1 and the base station 100-2, respectively, unless otherwise noted.

Also, each base station 100-1, 100-2 may be referred to as a base station 100, unless otherwise noted. Each terminal 200-1 to 200-3 may also be referred to as a terminal 200, unless otherwise noted.

Further, a communication link from the base station 100 to the terminal 200 may be referred to as a downward communication link (DL: Down Link), and a communication link from the terminal 200 to the base station 100 may be referred to as an upward communication link (UL: Up Link)

Also, in the example depicted in FIG. 2, there is illustrated an example of two base stations 100-1, 100-2. However, one base station, or three or more base stations may exist. Also in regard to the terminals, a case of three sets is illustrated in the example of FIG. 2. However, one or two, or more than four terminals may exist.

Here, the D2D communication represents radio communication in which the terminal 200 directly performs with another terminal without via the base station 100. Though the D2D communication is noted as Device to device communication in the 3GPP, for example, in other embodiments including the present second embodiment, the explanation of the Device to Device communication will be given with the notation of D2D communication.

### <Radio base station apparatus>

Next, a description will be given on a configuration example of the base station 100 according to the second embodiment.

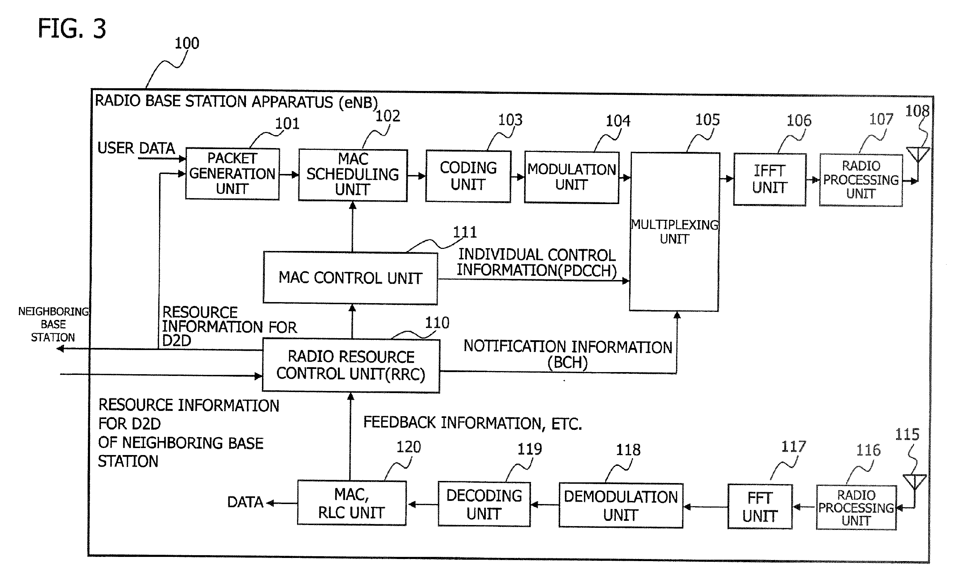

FIG. 3 is a diagram illustrating the configuration example of the radio base station 100. The base station 100 includes a packet generation unit 101, a MAC (Media Access Scheduling) scheduling unit 102, a coding unit 103, a modulation unit 104, a multiplexing unit 105, an IFFT (Inverse Fast Fourier Transform) unit 106, a radio processing unit 107, an antenna 108, a radio resource control unit 110 and a MAC control unit 111. Further, the base station 100 includes an antenna 115, a radio processing unit 116, an FFT (Fast Fourier Transform) unit 117, a demodulation unit 118, a decoding unit 119 and a MAC, RLC (Radio Link Control) unit 120.

Incidentally, the radio resource control unit 170 in the first embodiment corresponds to, for example, the radio resource control unit 110. Also, the first transmission unit 171 in the first embodiment corresponds to, for example, the packet generation unit 101, the MAC scheduling unit 102, the coding unit 103, the modulation unit 104, the multiplexing unit 105, the IFFT unit 106, the radio processing unit 107 and the antenna 108.

For user data and resource information for D2D that are output from the radio resource control unit 110, the packet generation unit 101 generates a transmission packet including the user data and the resource information for D2D. The user data is, for example, voice data, video data, etc. Also, the resource information for D2D is, for example, radio resource information for D2D communication allocated by the radio resource control unit 110. The detail of the resource information for D2D will be described later. The packet generation unit 101 generates, for example, a MAC packet etc., as a transmission packet.

The MAC scheduling unit 102 schedules the user data and the D2D resource information output from the packet generation unit 101. Also, the MAC scheduling unit 102 schedules control information (for example, RRC (Radio Resource Control) control information and MAC-CE (Media Access Control-Control Element) control information) that are output from the MAC control unit 111. For example, the MAC scheduling unit 102 performs scheduling by allocating the user data etc. to the radio resource of a shared channel such as a PDSCH (Physical Downlink Shared Channel), a PUSCH (Physical Uplink Shared Channel), etc. The MAC scheduling unit 102 outputs the scheduled transmission packet to the decoding unit 103.

The coding unit 103 performs error correction coding of the user data etc. in the transmission packet. A coding method and a coding rate for error correction coding are included in the allocation information of a radio resource (which may hereafter be referred to as "resource allocation information") generated by the radio resource control unit 110, for example, and the coding unit 103 receives the above information from the radio resource control unit 110, so that may perform the error correction coding, for example. The coding unit 103 outputs the coded user data etc. to the modulation unit 104.

The modulation unit 104 performs modulation processing, such as QPSK (Quadrature Phase Shift Keying) and 16QAM (Quadrature Amplitude Modulation), on the error correction coded user data, the D2D resource information, etc. For example, a modulation scheme is also included in the resource allocation information, and the modulation unit 104 receives the allocation information from the radio resource control unit 110, so that may perform the modulation processing. The modulation unit 104 outputs a modulated transmission packet to the multiplexing unit 105.

The multiplexing unit 105 multiplexes the output from the modulation unit 104 with individual control information output from the MAC control unit 111, so as to output the multiplexed signal to the IFFT unit 106. Also, the multiplexing unit 105 inputs notification information from the radio resource control unit 110, and also multiplexes the notification information, so as to output the multiplexed signal to the IFFT unit 106.

For example, the individual control information includes the radio resource allocation information, and is transmitted as a control signal to the terminal 200, using a control channel such as a PDCCH (Physical Downlink Control Channel). Also, the notification information is transmitted to a subordinate terminal 200 by broadcast, using a BCH (Broadcast Channel), for example. Incidentally, in some cases, the notification information may include the D2D resource information allocated by the radio resource control unit 110, for example. The details will be described later.

The IFFT unit 106 performs inverse fast Fourier transform on the output from the multiplexing unit 105, so as to convert the multiplexed signal in the frequency domain into a multiplexed signal in the time domain. The IFFT unit 106 outputs the time-domain multiplexed signal to the radio processing unit 107.

The radio processing unit 107 converts the multiplexed signal in a base band into a radio signal in a radio band, so as to output the radio signal to the antenna 108. For this purpose, the radio processing unit 107 may also include various circuits such as a digital-to-analog converter circuit and a frequency converter circuit, for example.

The antenna 108 transmits the radio signal output from the radio processing unit 107 to the terminal 200. By this, the user data, the D2D resource information, etc. are transmitted to the terminal 200.

The radio resource control unit 110 allocates radio resources (for example, frequency and time) for downlink communication and uplink communication with the terminal 200 subordinate to the base station 100. At this time, the radio resource control unit 110 allocates a radio resource for D2D communication. For example, the radio resource control unit 110 may allocate the resource for D2D on the basis of resource information for D2D allocated in another base station, feedback information transmitted from the terminal 200, etc.

Incidentally, a radio resource used when the terminal 200 performs D2D communication may be referred to as, for example, a "resource for D2D", and radio resource information related to the resource for D2D may be referred to as, for example, "resource information for D2D".

The radio resource control unit 110 outputs the resource allocation information to the MAC control unit 111. Further, the radio resource control unit 110 may output to the packet generation unit 101 the resource information for D2D out of the resource allocation information, and may also output to the multiplexing unit 105.

The MAC control unit 111 generates individual control information including resource allocation information other than the source information for D2D, to output to the multiplexing unit 105. Also, the MAC control unit 111 outputs an instruction to the MAC scheduling unit 102 to perform scheduling according to the resource allocation information. The MAC control unit 111 may also output the generated control information to the MAC scheduling unit 102.

Meanwhile, the antenna 115 receives a radio signal transmitted from the terminal 200.

The radio processing unit 116 converts the radio signal of a radio band received by the antenna 115 into a reception signal of a base band. For this purpose, the radio processing unit 116 may also include various circuits such as an analog-to-digital converter circuit and a frequency converter circuit, for example.

The FFT unit 117 performs fast Fourier transform on the reception signal output from the radio processing unit 116, to convert the reception signal in the time domain into a reception signal in the frequency domain. The FFT unit 117 outputs the reception signal after the fast Fourier transform to the demodulation unit 118.

The demodulation unit 118 performs demodulation processing on the reception signal. A demodulation scheme corresponds to, for example, a modulation scheme on the radio signal transmitted by the terminal 200. For example, the demodulation unit 118 receives resource allocation information from the radio resource control unit 110, so as to demodulate the radio signal according to the modulation scheme etc. included in the resource allocation information.

The decoding unit 119 performs error correction decoding on the demodulated reception signal. The error correction decoding method and a decoding rate are included, for example, in the resource control information received from the radio resource control unit 110, so that the decoding unit 119 performs error correction decoding according to the error correction decoding method etc.

The MAC, RLC unit 120 extracts user data, feedback information, etc. from the decoded reception signal. For example, the MAC, RLC unit 120 transmits the extracted user data etc. to an upper-level control apparatus, and outputs feedback information etc. to the radio resource control unit 110.

### <Configuration example of terminal apparatus>

Next, a configuration example of the terminal 200 will be described.

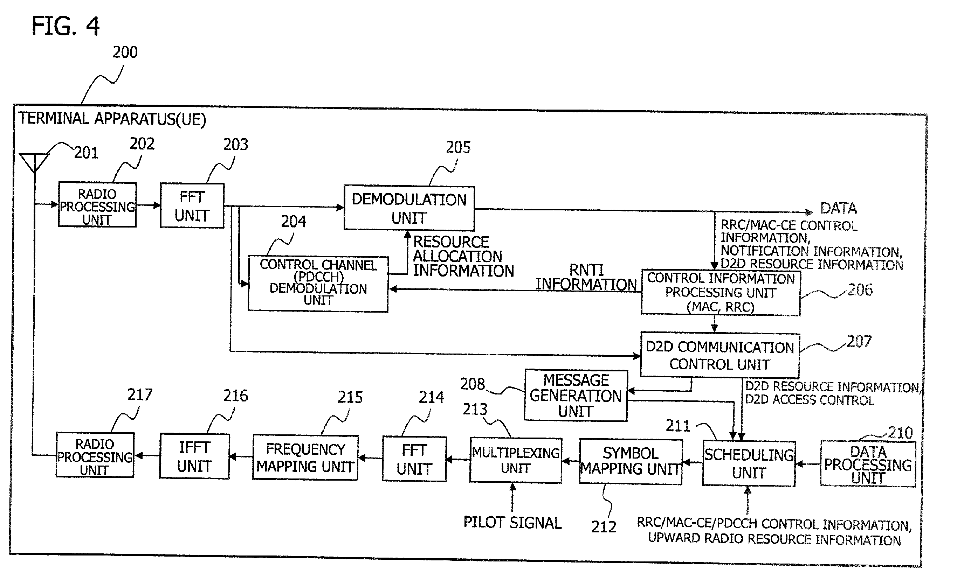

FIG. 4 is a diagram illustrating the configuration example of the terminal apparatus 200. The terminal 200 includes an antenna 201, a radio processing unit 202, an FFT unit 203, a control channel demodulation unit 204, a demodulation unit 205, a control information processing unit 206, a D2D communication control unit 207 and a message generation unit 208. Further, the terminal 200 includes a data processing unit 210, a scheduling unit 211, a symbol mapping unit 212, a multiplexing unit 213, an FFT unit 214, a frequency mapping unit 215, an IFFT unit 216 and a radio processing unit 217.

Incidentally, the reception unit 270 in the first embodiment corresponds to, for example, the antenna 201, the radio processing unit 202, the FFT unit 203, the control channel demodulation unit 204 and the demodulation unit 205.

The antenna 201 receives a radio signal transmitted from the base station 100 to output to the radio processing unit 202. Also, the antenna 201 transmits the radio signal output from the radio processing unit 217 to the base station 100. Further, the antenna 201 also receives a radio signal transmitted from another terminal that performs D2D communication to output to the radio processing unit 202, so that may transmit the radio signal output from the radio processing unit 217 to the other terminal that performs D2D communication.

The radio processing unit 202 converts a radio signal in a radio band into a reception signal in a base band. For this purpose, in the radio processing unit 202 also, various circuits such as an analog-to-digital converter circuit and a frequency converter circuit may also be included.

The FFT unit 203 performs fast Fourier transform on the reception signal output from the radio processing unit 202, so as to convert the reception signal in the time domain into a reception signal in the frequency domain.

The control channel demodulation unit 204 demodulates a control signal that is transmitted using a control channel such as PDCCH. At this time, the control channel demodulation unit 204 extracts a control signal coincident with RNTI information (which is included in MAC-CE control information, for example) transmitted from the base station 100, so that may extract a control signal for the self-station. In the demodulated control signal, resource allocation information is included. For example, the control channel demodulation unit 204 outputs the resource allocation information of a downward communication link to the demodulation unit 205, and outputs the resource allocation information of an upward communication link to the scheduling unit 211.

The demodulation unit 205 performs demodulation processing on the reception signal output from the FFT unit 203. A demodulation scheme is included in the resource allocation information, for example, and the demodulation unit 205 performs demodulation processing according to the demodulation scheme included in the resource allocation information that is output from the control channel demodulation unit 204. Also, the demodulation unit 205 may perform error correction decoding processing on the demodulated reception signal, so as to perform the error correction decoding processing according to an error correction decoding method, a decoding rate, etc. included in the resource allocation information. The demodulation unit 205 outputs the decoded data to another processing unit, and outputs D2D resource information, notification information, etc. to the control information processing unit 206.

Incidentally, in the D2D communication, by the exchange of signals between terminals, for example, the terminal 200 may determine a modulation scheme, a coding rate, etc. In this case, the demodulation unit 205 performs demodulation and decoding according to the determined modulation scheme, the coding rate, etc. The determination of the modulation scheme etc. may be made, for example, in the D2D communication control unit 207. For example, the D2D communication control unit 207 may output the determined modulation scheme etc. to the demodulation unit 205 to perform demodulation processing, and may also transmit as control information (for example, RRC control information or MAC-CE control information) to the other terminal through the scheduling unit 211, etc.

The control information processing unit 206 extracts various control information from the output of the demodulation unit 205. For example, the control information processing unit 206 extracts RNTI information from the output of the demodulation unit 205, to output to the control channel demodulation unit 204. Also, for example, the control information processing unit 206 extracts D2D resource information from the output of the demodulation unit 205, to output to the D2D communication control unit 207.

Based on the D2D resource information, the D2D communication control unit 207 recognizes a radio resource allocated as a D2D resource, so as to control to perform D2D communication between with the other terminal using the above radio resource. For example, the D2D communication control unit 207 outputs the D2D resource information to the scheduling unit 211, so that may control to perform D2D communication using the allocated resource for D2D. Further, the D2D communication control unit 207, when performing the D2D communication, may also instruct the message generation unit 208 to generate a message to be exchanged between with the other terminal.

The message generation unit 208 generates various messages according to the instruction of the D2D communication control unit 207. The message generation unit 208 outputs the generated message to the scheduling unit 211. An example of the message generated in the message generation unit 208 will be described later.

The data processing unit 210 performs various processing including compression coding of the user data. The data processing unit 210 outputs the processed data to the scheduling unit 211.

The scheduling unit 211 performs scheduling by allocating the data output from the data processing unit 210 to a radio resource of a shared channel such as PUSCH, on the basis of upward resource allocation information (or PDCCH control information) output from the control channel demodulation unit 204. Also, based on the resource information for D2D, the scheduling unit 211 performs scheduling such as allocating the data, which is output from the data processing unit 210, to the resource for D2D, and so on. Further, based on the resource information for D2D, the scheduling unit 211 performs scheduling such as allocating the message, which is output from the message generation unit 208, to the resource for D2D, and so on. The scheduling unit 211 outputs the scheduled data and the message to the symbol mapping unit 212.

The symbol mapping unit 212 performs modulation processing such as QPSK and 16QAM on the scheduled data and the message.

Incidentally, because a modulation scheme etc. for data transmitted to the base station 100 are included in the PDCCH control information, the symbol mapping unit 212 may perform modulation processing on the basis of the PDCCH control information output from the scheduling unit 211.

Further, when information related to the modulation scheme etc. (for example, MCS (Modulation and Coding Scheme)) for the data, the message, etc. to be transmitted in the D2D communication is determined in the D2D communication control unit 207, the information is input from the D2D communication control unit 207 through the scheduling unit 211 to the symbol mapping unit 212. On the other hand, information related to the modulation scheme, which is determined by the other terminal, is input to the terminal 200, as control information (for example, RRC control information etc). The above information related to the modulation scheme etc. is input to the symbol mapping unit 212 through the control information processing unit 206 and the scheduling unit 211. In both cases, the symbol mapping unit 212 performs modulation processing on the basis of the information, related to the modulation scheme, output from the scheduling unit 211.

The multiplexing unit 213 multiplexes a pilot signal with an output signal from the symbol mapping unit 212, to output as a multiplexed signal. In the pilot signal, for example, a preamble pattern that is known in the terminal 200 and the base station 100 is included.

The FFT unit 214 performs fast Fourier transform on the multiplexed signal output from the multiplexing unit 213, to convert the multiplexed signal in the time domain into a multiplexed signal in the frequency domain.

The frequency mapping unit 215 performs mapping processing on the multiplexed signal in the frequency domain output from the FFT unit 214 into a predetermined frequency band. For example, the frequency mapping unit 215 maps the multiplexed signal into a frequency band allocated to the terminal 200, and maps "0" into other frequency bands. Such processing may be referred to as subcarrier mapping, for example. The frequency mapping unit 215 outputs a signal including the mapped multiplexed signal to the IFFT unit 216.

The IFFT unit 216 performs inverse fast Fourier transform on the output signal from the frequency mapping unit 215, to convert the output signal in the frequency domain into an output signal in the time domain.

The radio processing unit 217 converts an output signal output from the IFFT unit 216 into a radio signal in a radio band, so as to output the converted radio signal to the antenna 201. For this purpose, the radio processing unit 217 includes various circuits such as a digital-to-analog converter circuit and a frequency converter circuit, for example. Incidentally, the radio signal output from the radio processing unit 217 is transmitted through the antenna 201 to the base station 100 and the other terminal that performs D2D communication, as a single carrier signal, for example.

### <Operation example of resource allocation for D2D>

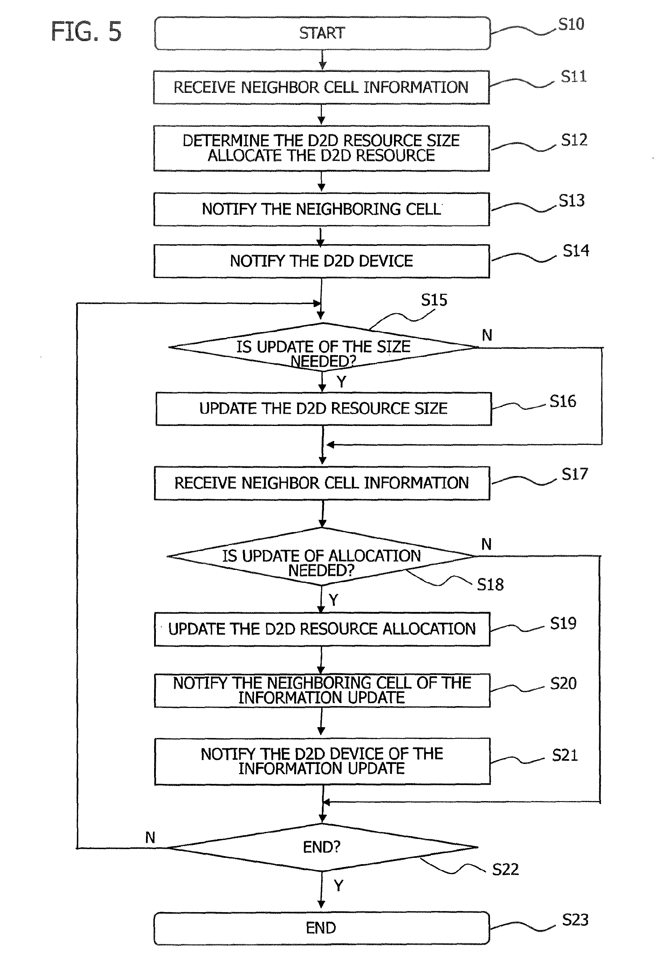

Next, a description will be given on an operation example of resource allocation for D2D performed in the base station 100. FIG. 5 is a flowchart illustrating the operation example of the resource allocation for D2D. In the present second embodiment, the base station 100 is configured to perform the resource allocation for D2D in consideration of an interference problem etc., for example.

The base station 100, on starting processing (S10), receives neighbor cell information (S11). For example, as the neighbor cell information, the radio resource control unit 110 receives the resource information for D2D of another base station transmitted from the other base station.

Next, based on the neighbor cell information, the base station 100 determines the size of the resource for D2D, and allocates the resource for D2D (S12). An example of the resource allocation for D2D will be described hereafter.

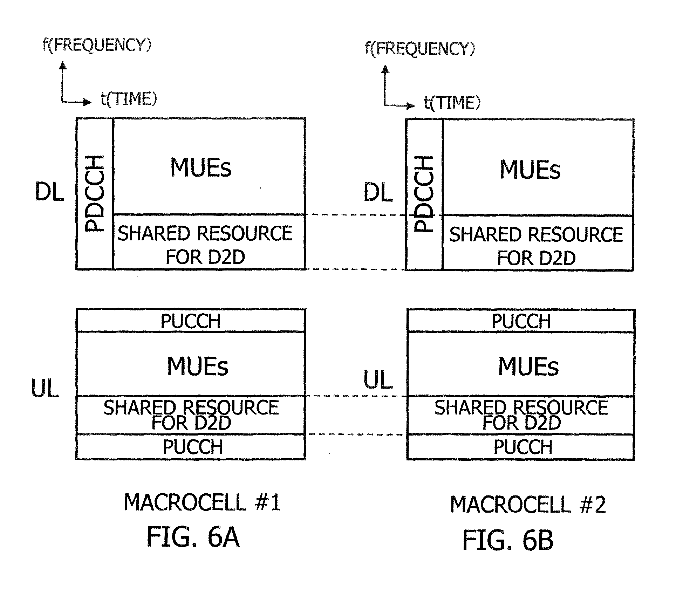

FIGS. 6A and 6B are diagrams illustrating examples of resource allocation for D2D by an FDD (Frequency Division Duplex) method. In each FIG. 6A, 6B, the vertical axis represents a frequency axis direction, and the horizontal axis represents a time axis direction. FIG. 6A represents the allocation example of the resource for D2D ("Shared resource for D2D" in the Figure) performed by a base station 100-1, and FIG. 6B represents the allocation example performed by a base station 100-2, respectively.

The examples of FIGS. 6A and 6B represent radio resources for DL and UL for one subframe, for example. In these cases, the radio resource for DL in the base station 100-1 and the radio resource for DL in the base station 100-2 represent the same subframe, for example. Therefore, the resource for D2D of the radio resource for DL in the base station 100-1 and the resource for D2D of the radio resource for DL in the base station 100-2 are allocated to the same radio resource (the same time and the same frequency channel). Also in regard to each resource for D2D of the radio resource for UL, the same radio resource is allocated by the two base stations 100-1, 100-2.

Namely, the base station 100-1 allocates the resource for D2D of the self-station to the same radio resource region as the resource for D2D of the base station 100-2 set in the radio resource of a downward communication link. Also, the base station 100-1 allocates the resource for D2D of the self-station to the same radio resource region as the resource for D2D of the base station 100-2 set in the radio resource of an upward communication link.

As such, in regard to the resource for D2D, a common radio resource to the base stations comes to be used. This enables preventing the problem of interference between the D2D communication and the base station-terminal communication. The reason is described below.

For example, as depicted in FIG. 6A, the resource for D2D in the base station 100-1 is not overlapped with radio resources (MUEs (Macro User Equipments)) for use in the base station-terminal communication.

Therefore, an interference problem does not occur because a radio signal transmitted and received between the two terminals, which are subordinate to the base station 100-1 and performing D2D communication, and a radio signal transmitted and received between the base station 100-1 and the terminal 200 use different frequency channels (or different radio resources).

For example, in the example of FIG. 2, it is possible to avoid interference because different radio resources are used between the radio signal transmitted and received in the D2D communication between terminals 200-1, 200-2 and the radio signal transmitted and received when another terminal subordinate to the base station 100-1 performs base station-terminal communication.

Also, as depicted in FIGS. 6A and 6B, each resource for D2D ("Shared resource for D2D" in FIG. 6A) in the base station 100-1 is not overlapped with the radio resources ("MUEs" in FIG. 6B) for use for the base station-terminal communication in the base station 100-2.

In the example of FIG. 2, a frequency channel (for example, each resource for D2D in FIG. 6A) used in the D2D communication between the terminals 200-1, 200-2 is not overlapped with frequency channels (for example, "MUEs" in FIG. 6B) used in the base station-terminal communication between the base station 100-2 and the terminal 200-3.

Also, in the example of FIG. 2, a frequency channel used for a radio signal received by the base station 100-2 from the terminal 200-1 (a radio signal in the D2D communication) is not overlapped with a frequency channel used for a radio signal received from the terminal 200-3 (a radio signal in the base station-terminal communication).

Accordingly, it is possible to avoid interference because the radio signal transmitted and received in the D2D communication between the terminals 200-1, 200-2 and the radio signal transmitted and received in the base station-terminal communication between the base station 100-2 and the terminal 200-3 use different frequency channels.

Thus, it is possible to avoid interference between the D2D communication and the base station-terminal communication, if the base station 100 allocates a resource for D2D of the self-station in a radio resource region coincident with the region of a resource for D2D set by a neighboring base station (for example, the base station 100-2).

Incidentally, to make the resource for D2D coincident with the resource for D2D of the neighboring base station, the base station 100 allocates the resource for D2D of the self-station on the basis of the resource for D2D of the neighboring base station included in neighbor cell information (S11 in FIG. 2).

In regard to the allocation of the resource for D2D, there are various examples as described in the following.

For example, it is possible to have a variable resource for D2D according to the quantity of communication traffic (or communication quantity) between terminals that perform D2D communication.

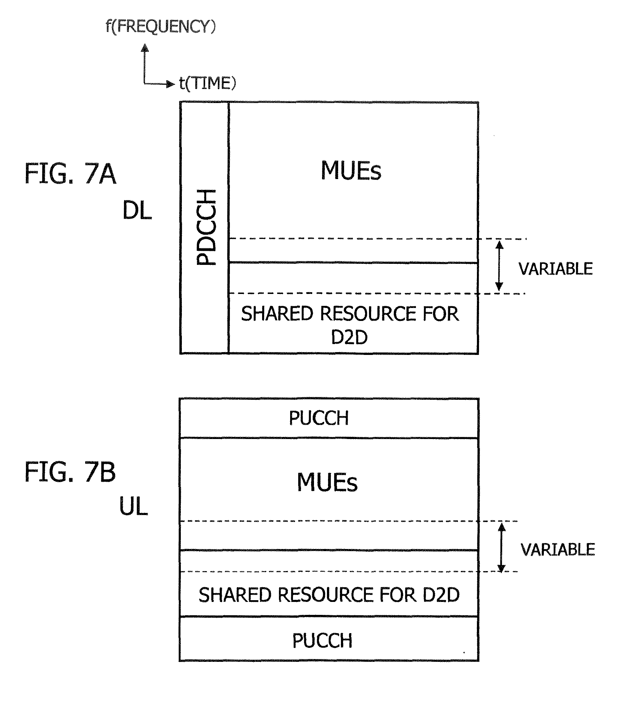

FIG. 7 is a diagram illustrating an example of radio resource allocation when the resource for D2D is varied. For example, it is possible for the radio resource control unit 110 of the base station 100 to actualize the radio resource allocation by calculating the communication traffic quantity between the terminals that perform the D2D communication and varying the resource for D2D according to the calculated communication traffic quantity.

Also, as to the resource for D2D, it is possible for the base station 100 to set the resource in a radio resource region that is partially overlapped with the resource for D2D in the neighboring base station.

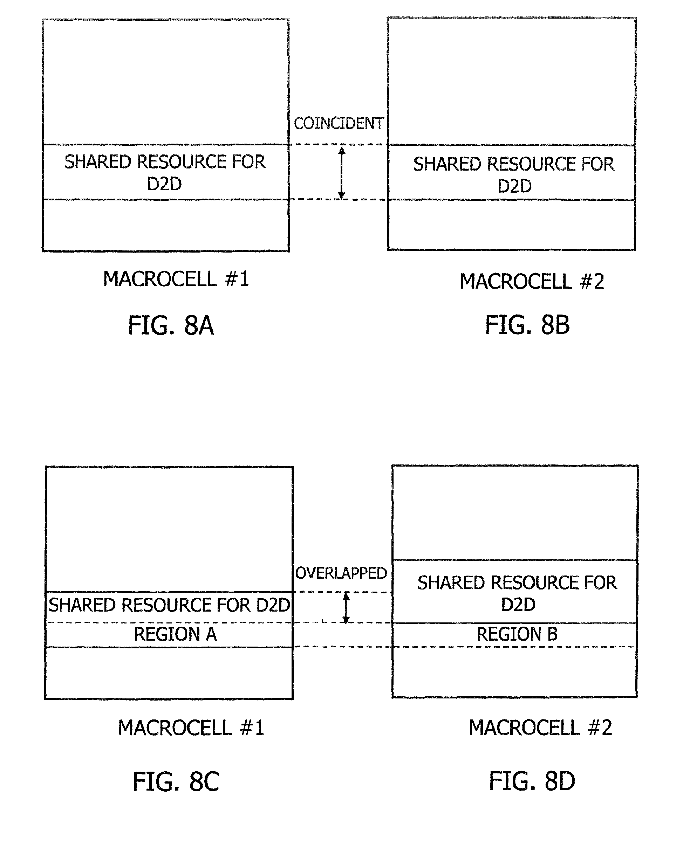

FIGS. 8A and 8B illustrate examples when each resource for D2D (for example, UL) is allocated in the same region between base stations, whereas FIGS. 8C and 8D illustrate examples when a part of resources for D2D (for example, UL) is allocated to an overlapped region between the base stations.

When a part of the resources for D2D is allocated in an overlapped manner between the base stations, each D2D radio resource in the overlapped radio resource region is coincident between the base stations, and therefore it is possible to avoid interference between the D2D communication and the base station-terminal communication, as described earlier.

However, as depicted in FIGS. 8C and 8D for example, there may be a case that the base station 100-1 allocates a resource for D2D in a region A, and the base station 100-2 allocates a radio resource for base station-terminal communication in a region B which is the same radio resource as the region A.

In this case, because the radio resource (for example, frequency channel) is overlapped between the region A and the region B, interference may occur between the D2D communication and the base station-terminal communication. For example, interference may occur between a radio signal transmitted from the terminal 200-1 that performs D2D communication using the resource for D2D in the region A and a radio signal transmitted from the base station 100-2 to the terminal 200-3 in the region B (for example, FIG. 2).

In such a case, it is possible to avoid interference if the base station 100 performs transmission power control in regard to a radio resource in the non-overlapped region (for example, region A).

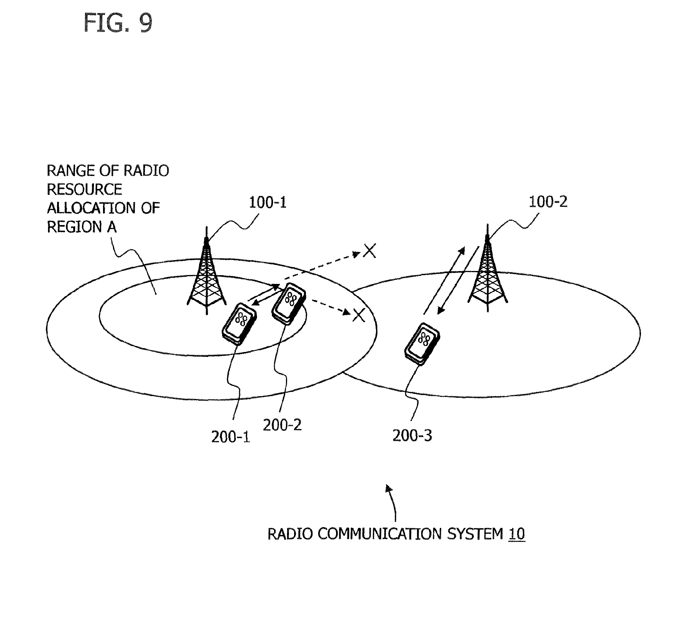

FIG. 9 is a diagram for explaining an example of the transmission power control. For example, the base station 100-1 is configured to allocate a radio resource in the region A to the terminal 200-1 (or the terminal 200-2) that performs D2D communication at a distance smaller than a threshold from the base station 100-1. Then, the terminal 200-1 having the allocated radio resource in the region A performs D2D communication with transmission power smaller than (or minimum) transmission power used when a resource for D2D is allocated in any other region. For example, when the terminal 200-1 performs the transmission power control, a radio signal transmitted from the terminal 200-1 does not reach the base station 100-2. Therefore, the transmission power control enables inhibiting an influence upon base station-terminal communication between the base station 100-1 and the terminal 200-3, and thus, it is possible to avoid interference.

Meanwhile, when the two terminals 200-1, 200-2 is performing the D2D communication across the respective service area ranges of the two base stations 100-1, 100-2 (for example, FIG. 2), it may also be possible for the base station 100-1 to allocate a radio resource in the overlapped region to the terminal 200-1 (or the terminal 200-2). It is possible to perform D2D communication without interfering base station-terminal communication if the base station 100 allocates a radio resource in the overlapped region when a part of the resource for D2D is overlapped with the resource for D2D of the neighboring base station.

As such, if the base station 100 allocates, as a resource for D2D, the same radio resource or a partially overlapped radio resource between the base stations, it is possible to avoid interference between the D2D communication and the base station-terminal communication.

In this case, the base station 100 is not needed to exchange control information to receive the allocation of resources for D2D between with the terminals 200-1, 200-2 that perform the D2D communication. Therefore, it is possible for the terminals 200-1, 200-2 to perform the D2D communication without any complicated processing, caused by the exchange of control information, in the base station 100 and the terminals 200-1, 200-2.

Further, in regard to the allocation of the resource for D2D, it is possible to restrict a subframe to which the resource for D2D is to be set. This enables setting the radio resource allocation by TDD (Time Division Duplex) also.

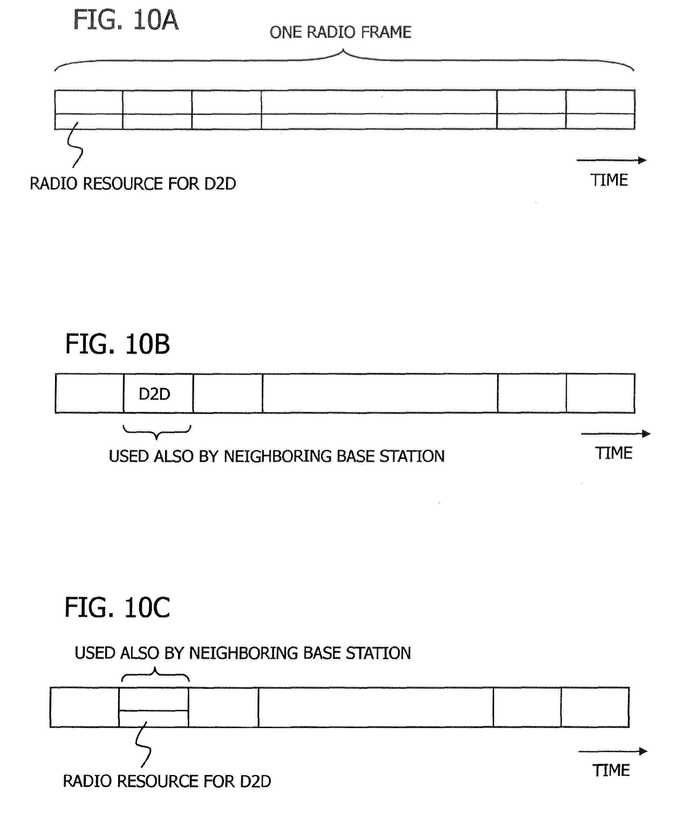

FIGS. 10A-10C are diagrams illustrating examples of radio resource allocation for one radio frame. FIG. 10A illustrates an example in which the resources for D2D are allocated in all subframes.

On the other hand, as depicted in FIGS. 10B and 10C, it is also possible for the base station 100 to allocate a resource for D2D in a certain subframe, without allocating any resource for D2D in other subframes. In this case, for a certain subframe, it is also possible for the base station 100 to allocate an overall subframe as the resource for D2D (for example, FIG. 10B).

In the exemplary cases of FIGS. 10B and 10C, the base station 100 is configured to allocate the resource for D2D of the self-station in a subframe in which a resource for D2D is allocated by the neighboring base station.

Further, in the present embodiment, it is also possible for the base station 100 to set a radio resource to enable D2D communication even when the terminal 200 moves outside the service area of the base station 100.

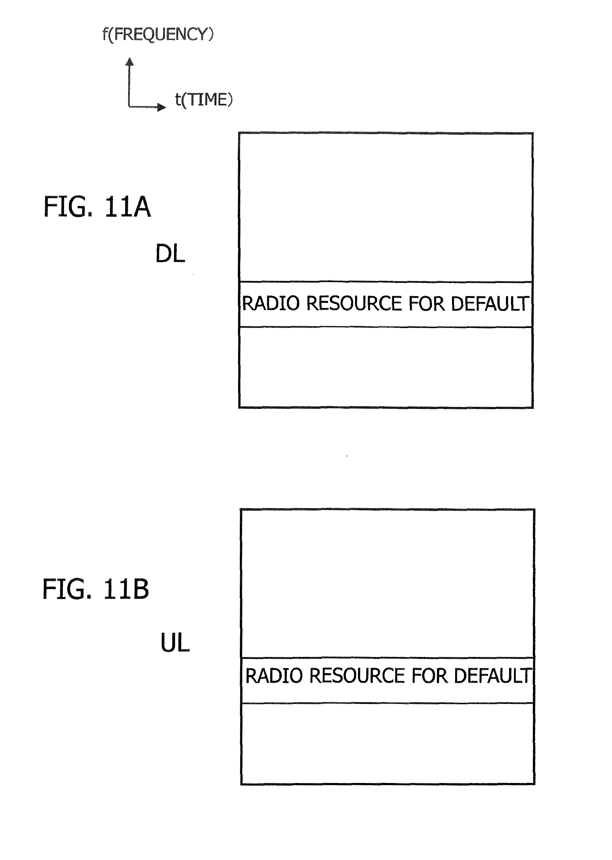

FIG. 11 is an example of radio resource allocation to be used for D2D communication when there is a movement to the outside of the service area of the base station 100. Such a radio resource may be referred to as a "default radio resource", for example.

The default radio resource may be set to an arbitrary radio resource (for example, frequency channel). The reason is that, even when the default radio resource is overlapped with a radio resource used for base station-terminal communication, a radio signal for D2D communication does not interfere with a radio signal for base station-terminal communication, because the terminal 200 performing the D2D communication is located outside the service area of the base station 100.

For example, the base station 100 allocates a radio resource for default, which is set to be a radio resource for DL, to one terminal 200-1 that performs D2D communication, and also allocates a default radio resource, which is set to be a radio resource for UL, to another terminal 200-2 that performs D2D communication.

In this case, similar to the radio resource for D2D, for example, it is possible for the base station 100 to allocate the default radio resource to a radio resource that is the same as or partially overlapped with the default radio resource allocated by the neighboring base station. By this, for example, to the terminal 200 performing the D2D communication, the same or partially overlapped radio resource is allocated from any base station 100, so that the terminal 200 may perform D2D communication using such a radio resource. Therefore, the terminal 200 may perform the D2D communication outside the service area of the base station 100, without using a different radio resource depending on which base station 100 processing is subordinate to, and without complicated processing.

As such, the base station 100 allocates a resource for D2D to the terminal 200, and further allocates a default radio resource to the terminal 200, so that the terminal 200 may perform the D2D communication irrespective of whether or not the terminal 200 performing the D2D communication is located in the service area of the base station 100. The terminal 200 performing the D2D communication uses the resource for D2D when located in the service area of the base station 100 and uses the default radio resource when located outside the service area, and thus, it is possible to avoid interference between the D2D communication and the base station-terminal communication.

Referring back to FIG. 5, the base station 100, on allocating the resource for D2D (S12), notifies the neighboring base station of the resource information for D2D (S13). For example, the radio resource control unit 110 allocates the resource for D2D, generates the resource information for D2D for the neighboring base station, and transmits the generated resource information for D2D to the neighboring base station.

Next, the base station 100 notifies the terminal 200 that performs the D2D communication of the resource information for D2D (S14). In regard to the notification of the D2D resource information, for example, it is possible to notify using RRC signaling. For example, the radio resource control unit 110 outputs the resource information for D2D to the packet generation unit 101, so that may also transmit the resource information for D2D as control information. Also, the radio resource control unit 110 outputs the resource information for D2D to the multiplexing unit 105, so that may transmit the resource information for D2D as notification information. On the other hand, in regard to information related to the default radio resource (which may hereafter be referred to as "default resource information"), the base station 100 may transmit the default radio resource as control information or notification information, and also transmit by OAM (Operation and Maintenance). For example, the radio resource control unit 110 generates an OAM cell including the default resource information to output to the packet generation unit 101, so that may transmit to the terminal 200 by the OAM.

Next, the base station 100 determines whether or not the size of the resource for D2D is to be updated (S15). For example, the radio resource control unit 110 determines to update the size of the resource for D2D when communication traffic at the present processing changes greater than and including a threshold, as compared to the communication traffic when the resource for D2D is allocated in the processing of S12. For example, the base station 100 receives from the terminal 200 an index (or indicator) related to a buffer state, as feedback information. The radio resource control unit 110 calculates a value calculated from the index as the quantity of communication traffic, so that may determine whether or not to update the size depending on whether the change quantity between the time point of the processing of S12 and the time point of the present processing changes greater than and including the threshold.

On determining to update the size of the resource for D2D (Y in S15), the base station 100 updates the resource for D2D (S16). For example, when the communication traffic at the time point of S15 changes greater than and including the threshold as compared to the communication traffic at the time point of S12, the radio resource control unit 110 updates the resource for D2D to be increased as compared to the resource for D2D at the time point of S12. On the other hand, for example, when the communication traffic at the time point of S15 does not change greater than and including the threshold as compared to the communication traffic at the time point of S12, the radio resource control unit 110 updates the resource for D2D to be decreased as compared to the resource for D2D at the time point of S12. FIG. 7 illustrates an allocation example of the radio resource after the update.

Referring back to FIG. 5, on determining not to update the size of the resource for D2D (N in S15), the base station 100 shifts to the processing of S17 without performing the processing of S16.

After updating the size of the resource for D2D (S16) or when determining not to update the size of the resource for D2D (N in S15), the base station 100 receives neighbor cell information (S17). In the neighbor cell information, for example, resource information for D2D at the neighboring base station is included.

Next, based on the neighbor cell information, the base station 100 determines whether or not to update the allocation of the resource for D2D (S18). For example, it is possible for the radio resource control unit 110 to determine by discriminating whether or not the resource allocation for D2D of the neighboring base station, which is included in the received neighbor cell information (S17), changes as compared to the received resource allocation for D2D of the neighboring base station.

On determining to update the resource allocation for D2D (Y in S18), the base station 100 updates the allocation of the resource for D2D of the self-station (S19). For example, the radio resource control unit 110 performs the radio resource allocation in such a manner that the same radio resource as, or a radio resource partially overlapped with the resource for D2D of the neighboring base station after the change becomes the resource for D2D.

Next, the base station 100 transmits the resource information for D2D after the update to the neighboring base station, and also to the terminal 200 that performs the D2D communication (S20, S21). For example, the radio resource control unit 110 transmits the updated resource information for D2D to the neighboring base station, and further, transmits the updated resource information for D2D to the terminal 200 as control information or notification information.

Next, to terminate a series of processing by switching off power (Y in S22) for example, the base station 100 terminates the processing (S23), and if otherwise (N in S22), the base station 100 shifts to the processing of S15, so as to repeat the series of processing (S15-S22).

On the other hand, on determining not to update the resource allocation for D2D (N in S18), the base station 100 shifts to the processing of S22 without performing processing from S19 to S21. The base station 100 then repeats the above-mentioned processing (S15-S22).

Incidentally, when D2D communication is performed between the pair of terminals 200-1, 200-2, the base station 100 allocates, for example, a resource for D2D included in a radio resource for DL to the terminal 200-1. Also in this case, the base station 100 allocates a resource for D2D included in a radio resource for UL to the terminal 200-2.

Further, when D2D communication is performed between each of a plurality of pairs of terminals 200, the base station 100 performs radio resource allocation such that a resource for D2D included in a radio resource for DL is to be used in a shared manner with one terminal group of each pair. In this case, the base station 100 performs the allocation such that a resource for D2D included in a radio resource for UL is to be used in a shared manner with another terminal group of each pair. By this, for example, each resource for D2D is used in a shared manner with each of the plurality of terminal pairs that performs D2D communication.

### <Operation example of D2D communication>

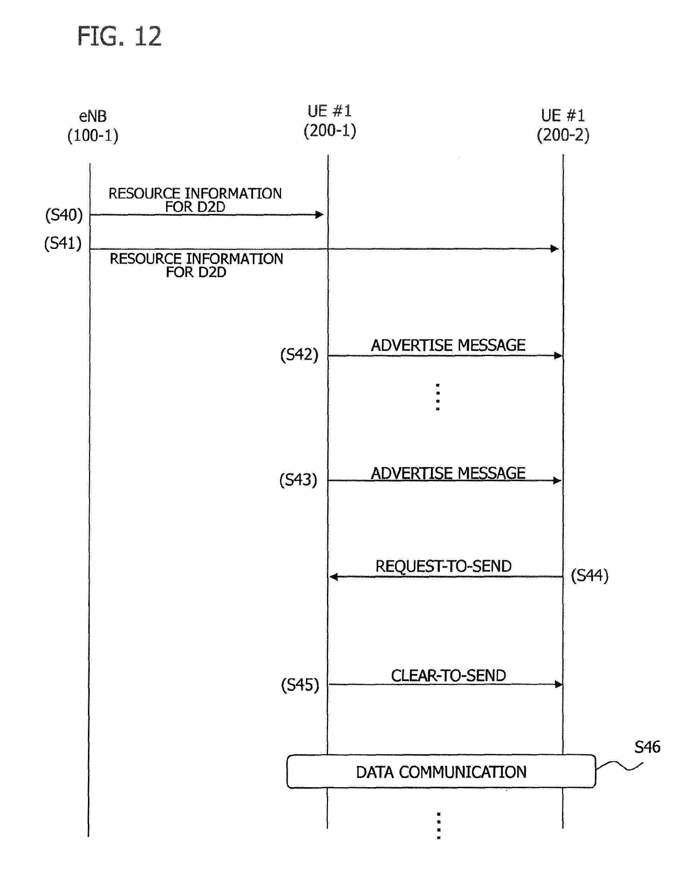

Next, a description will be given on an example of D2D communication performed in the terminal 200 having an allocated resource for D2D. FIG. 12 is a sequence diagram representing an operation example of the D2D communication. Specifically, FIG. 12 represents a sequence example before the D2D communication is started between two terminals 200-1, 200-2.

In the D2D communication, an access control method such as CSMA-CA (Carrier Sense Multiple Access-Collision Avoidance method) is used. By this, as one of collision avoidance procedures in D2D communication, it is possible to avoid the collision of radio signals in the D2D communication.

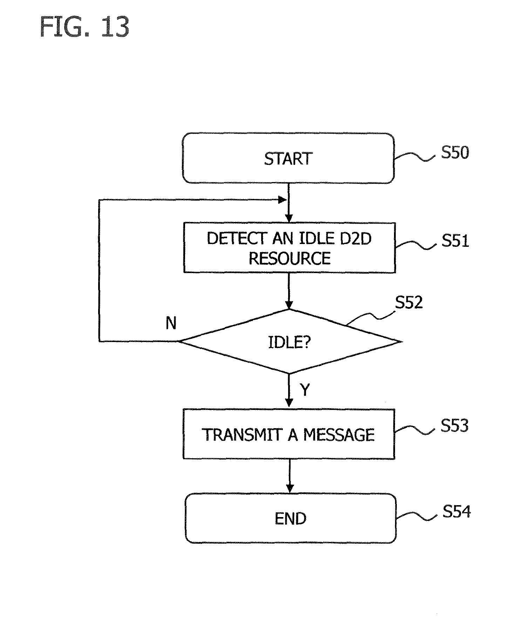

FIG. 13 is a flowchart illustrating one example of such an access control. The access control is executed in each terminal 200-1, 200-2 before messages are transmitted each other between each terminal 200-1, 200-2, for example.

A description will be given in regard to FIG. 12 first, with a description appropriately given by using FIG. 13.

The terminal 200-1 receives resource information for D2D from the base station 100-1 (S40). The terminal 200-2 also receives the resource information for D2D from the base station 100-1 (S41). In the example of FIG. 12, the base station 100-1 individually transmits the D2D resource information to each terminal 200-1, 200-2. However, the base station 100-1 may transmit the D2D resource information in broadcast, as notification information.

The terminal 200-1, on receiving the resource information for D2D, transmits an Advertise message in order to notify the neighbors of the existence of the self-station (S42). Before that, the terminal 200-1 performs access control as depicted in FIG. 13, for example.

The terminal 200-1 starts access control processing (S50), to detect whether there is an idle radio resource among received resources for D2D (S51, S52). For example, the D2D communication control unit 207 detects an unused frequency etc. among frequency channels allocated as the resources for D2D, on the basis of an output from the FFT unit 203.

If there is any idle radio resource among the resources for D2D (Y in S52), the terminal 200-1 transmits a message using the radio resource (S53, and S42 in FIG. 12). The terminal 200-1 then terminates a series of processing (S54).

On the other hand, if there is no idle resource among the resources for D2D (N in S52), the terminal 200-1 shifts to S51, so as to repeat detection until an idle radio resource is found (loop of S51 and S52).

Referring back to FIG. 12, the terminal 200-1 transmits an Advertise message using an idle radio resource among the resources for D2D (S42). For example, the D2D communication control unit 207, on detecting an idle radio resource, instructs the message generation unit 208 to generate the Advertise message, and thus, the Advertise message is transmitted from the message generation unit 208 to the terminal 200-2.

The terminal 200-1 transmits the Advertise message periodically (S42-S43). Before the transmission of each Advertise message, the terminal 200-1 executes the access control (for example, FIG. 13).

From among Advertise messages received from a plurality of terminals 200, when the terminal 200-2 finds out a terminal 200-1 that is desired to communicate with, the terminal 200-2 transmits a Request-to-send message to the terminal 200-1 (S44).

For example, the D2D communication control unit 207 of the terminal 200-2 receives the Advertise message output from the control information processing unit 206, confirms the identification information of the terminal 200-1 included in the message, and recognizes to be the terminal 200-1 that is desired to communicate with. The D2D communication control unit 207 then instructs the message generation unit 208 to generate the Request-to-send message. This causes the transmission of the Request-to-send message from the terminal 200-2 to the terminal 200-1.

Here, the terminal 200-2 also performs access control (for example, FIG. 13) before transmitting the message, so as to transmit the message using a radio resource not in use among the resources for D2D allocated from the base station 100.

The terminal 200-1, on receiving the Request-to-send message destined to the self-station, transmits a Clear-to-send message to the terminal 200-2 (S45). The Clear-to-send message is, for example, a message to permit the terminal 200-2 to establish a link.

For example, the D2D communication control unit 207 in the terminal 200-1 receives the Request-to-send message through the control information processing unit 206. From the identification information of the terminal 200-2 included in the message, the D2D communication control unit 207 recognizes a terminal 200-2 that requests D2D transmission, and instructs the message generation unit 208 to generate the Clear-to-send message. Thus, the terminal 200-1 transmits the Clear-to-send message. Here, before transmitting the message, the terminal 200-1 performs access control (for example, FIG. 13).

In the above series of sequence, it is also possible for the terminals 200-1, 200-2 to notify another terminal of the use of an idle radio resource for a certain period.

For example, the terminal 200-1 inserts information indicative of a use period (for example, 10 ms or the like) into the Clear-to-send message to transmit, so that the other terminal, when receiving the message, may recognize that the idle radio resource is to be used for a certain period.

Then, data is transmitted and received between the terminals 200-1, 200-2 (S46).

In the above-mentioned manner, the two terminals 200-1, 200-2 may transmit and receive a message, data, etc. using the resource for D2D allocated in the base station 100-1, so that may perform the D2D communication.

As described above, transmission power control between the terminals 200-1, 200-2 also enables further avoidance of interference. Specifically, as described above, it is effective when the resource for D2D is set in such a manner that a part of the resource for D2D is overlapped (for example, FIG. 9). The transmission power control may be executed in the following manner, for example, in the sequence depicted in FIG. 12.

Namely, the terminal 200-1, when transmitting the Advertise message and the Clear-to-send message (S42, S45), notifies transmission power together. The terminal 200-2 detects reception power at the reception of the Advertise message and the Clear-to-send message.

Then, the terminal 200-2 subtracts the notified transmission power from the reception power of each message, so that may estimate a propagation loss of a communication link between with the terminal 200-1. From the estimated propagation loss, the terminal 200-2 determines the transmission power of the data and the message to be transmitted to the terminal 200-1. According to the determined transmission power, the terminal 200-2 transmits the data, the message, etc., so that may transmit to the terminal 200-1 with minimal transmission power.

Such transmission power control may be performed in the D2D communication control unit 207, for example. Namely, the D2D communication control unit 207 calculates the reception power of a reception signal from the radio processing unit 202. Also, the D2D communication control unit 207 inputs a message transmitted from the terminal 200-1 through the demodulation unit 205, the control information processing unit 206, etc. The D2D communication control unit 207 then extracts transmission power included in the message, estimates a propagation loss on the basis of the extracted transmission power and the reception power of the message, so as to determine the transmission power. The D2D communication control unit 207 notifies the radio processing unit 217 of the transmission power through the scheduling unit 211, and the radio processing unit 217 transmits the message, the data, etc., according to the notified transmission power.

Incidentally, the terminal 200-2, when transmitting the Request-to-send message (S44), may notify the transmission power of the message together, so that the terminal 200-1 may estimate the propagation loss and determine the minimal transmission power. The terminal 200-1 transmits the data, the message, etc. according to the transmission power.

This enables D2D communication between the terminals 200-1, 200-2 with minimal transmission power, and avoidance of interference to the terminal 200, the base station 100, and yet another terminal that performs D2D communication (for example, FIG. 9).

Incidentally, in regard to the resource for D2D, when a partially overlapped radio resource is set between the base stations (for example, FIG. 8C and 8D), it is desirable that the terminals 200-1, 200-2 transmit messages (for example, S42-S45 in FIG. 12) using the overlapped radio resource. The reason is that the use of the radio resource in the overlapped region enables the terminals 200-1, 200-2 to notify the opposite communication terminals 200-2, 200-1 of the messages to be transmitted and received at the start of the D2D communication, with avoided interference.

### <Another example related to resource for D2D>

Next, another example related to the resource for D2D will be described. The examples of radio resource allocation as depicted in FIGS. 6A, 6B, etc. represent examples when each radio resource is allocated one by one for a downward communication link and an upward communication link, for example. For example, it is also possible for the base station 100 to allocate a plurality of radio resources for the downward communication link using a plurality of frequency channels, and allocate a plurality of radio resources for the upward communication link using other frequency channels than the above.

As such, when allocating the plurality of radio resources using the plurality of frequency channels, the base station 100 may allocate resources for D2D to all of the plurality of radio resources, or allocate resources for D2D to a part of the radio resources.

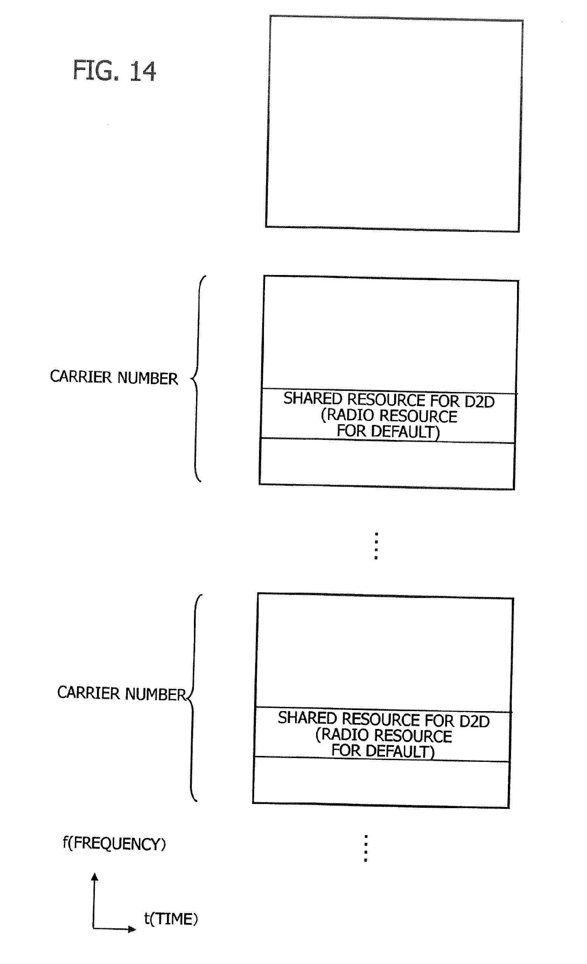

FIG. 14 is a diagram illustrating an example of radio resource allocation when the resources for D2D are allocated to a part of the radio resources. It is possible for the base station 100 to notify the terminal 200 of the identification information ("carrier number" in FIG. 14) of the radio resource (or frequency channel) to which the resource for D2D is allocated, by including in the D2D resource information.

This enables the terminal 200 to easily recognize, when a plurality of radio resources are available, which frequency channel of the radio resources is to be used to perform D2D communication. In this case, it is possible for the terminal 200 to perform the D2D communication using a resource for D2D included in the radio resource of the frequency channel designated by the identification information.

The above is also applicable to a radio resource for default. Namely, it is possible for the base station 100 to allocate the radio resource for default to all of the plurality of radio resources using a plurality of frequency channels, or it is also possible to allocate to a part of the radio resources. When allocating to the part of the frequency channels, the base station 100 may notify the terminal 200 of identification information ("carrier number" in FIG. 14) representing that a radio resource of which frequency channel the radio resource for default is allocated to, by including in the D2D resource information.

Further, when using the plurality of radio resources of the frequency channels, the base station 100 may allocate a resource for D2D in a different position from a position in which each resource for D2D is allocated for other cases, among the plurality of radio resources to which resources for D2D are allocated.

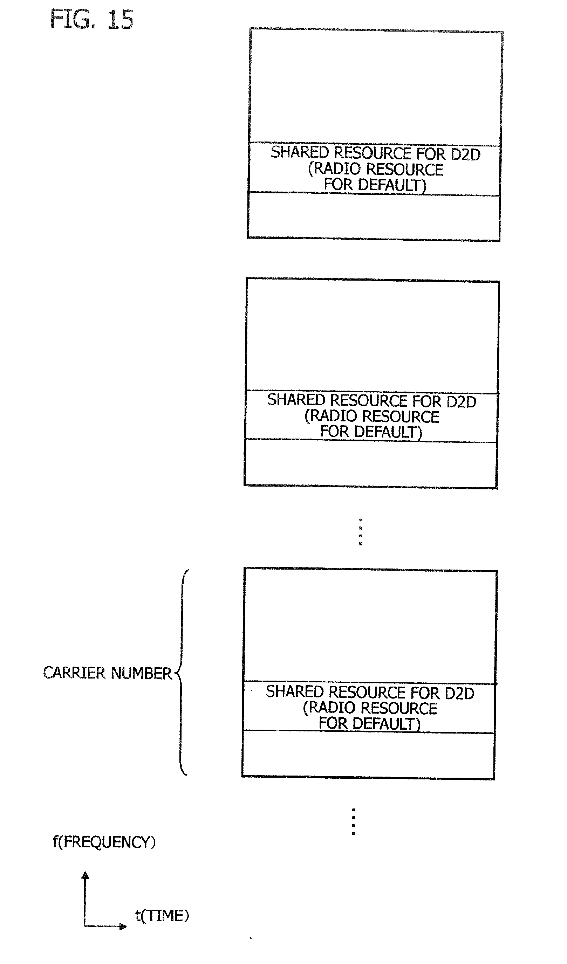

FIG. 15 is a diagram illustrating an example of radio resource allocation when, among a plurality of radio resources, a part of radio resources is allocated as a resource for D2D in a different position from other cases. In this case, the base station may communicate with the terminal 200 by including, in the D2D resource information, identification information of a radio resource (or a frequency channel), in which the resource for D2D is allocated in the different position from the others. Based on the identification information, the terminal 200 may easily recognize a radio resource of which frequency channel is allocated as the resource for D2D in the different position from the others, and perform the D2D communication using the resource for D2D in the radio resource.

In the present second embodiment, the base station 100 allocates the same radio resource as or a partially overlapped resource with the resource for D2D of a neighboring base station, as a resource for D2D of the self-station. Relationship between a base station 100-1 that performs such allocation and a neighboring base station 100-2 comes to be the following, for example.

For example, in the example of FIG. 2, interference between the D2D communication and the base station-terminal communication causes a problem, and when viewed from the base station 100-1, the base station 100-2 having such relation of interference occurrence becomes the neighboring base station. For example, when two terminals 200-1, 200-2 are performing D2D communication at an edge in the service area range of the base station 100-1, the base station 100-2 becomes an object when a radio signal transmitted from the terminal 200-2 reaches a terminal 200-3 that is performing base station-terminal communication at the edge of the base station 100-2. Also, in the above case, when a radio signal transmitted from the terminal 200-1 reaches the base station 100-2, the base station 100-2 becomes the object of the neighboring base station.

Accordingly, when a radio signal that causes the occurrence of interference reaches, the base station 100-2 becomes a neighboring base station when viewed from the base station 100-1, so that the resource allocation for D2D is made using the same or a partially overlapped radio resource.

On the other hand, in the above case, when a radio signal transmitted from the terminal 200-2 does not reach the terminal 200-3, and when a radio signal transmitted from the terminal 200-1 does not reach the base station 100-2, the base station 100-2 does not become a neighboring base station. In this case, the base station 100-1 does not allocate the same region as or a partially overlapped region with the resource for D2D set by the base station 100-2, as a resource for D2D of the self-base station 101. This is because no interference problem occurs.

### [Other embodiments]

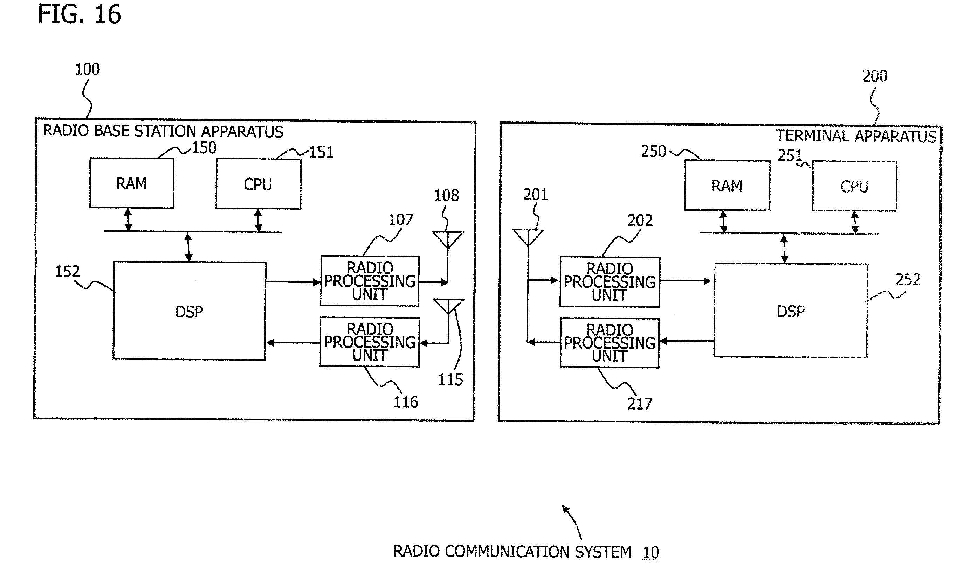

FIG. 16 is a diagram illustrating another configuration example of a base station 100 and a terminal 200 in the radio communication system 10. In the second embodiment, there has been described that the embodiment can be made using the base station 100 and the terminal 200 depicted in FIGS. 3 and 4. Also in the base station 100 and the terminal 200 depicted in FIG. 16, it is possible to perform radio resource allocation etc. according to the second embodiment.

The base station 100 further includes a RAM (Random Access Memory) 150, a CPU (Central Processing unit) 151 and a DSP (Digital Signal Processor) 152. Also, the terminal 200 further includes a RAM 250, a CPU 251 and a DSP 252.

For example, the CPU 151 and the DSP 152 correspond to the packet generation unit 101, the MAC scheduling unit 102, the coding unit 103, the modulation unit 104, the multiplexing unit 105, the IFFT unit 106, the radio resource control unit 110, the MAC control unit 111, the FFT unit 117, the demodulation unit 118, the decoding unit 119 and the MAC, RLC unit 120 in the second embodiment.

The CPU 151 outputs, for example, a control signal to the DSP 152, so that the DSP 152 may achieve each function from the packet generation unit 101 to the IFFT unit 106, the radio resource control unit 110, the MAC control unit 111, and from the FFT unit 117 to the MAC, RLC unit 120. At that time, the DSP 152 and the CPU 151 access the RAM 150, so that may appropriately store data etc., also.

On the other hand, as to the terminal 200, for example, the CPU 251 and the DSP 252 correspond to the FFT unit 203, the control channel demodulation unit 204, the demodulation unit 205, the control information processing unit 206, the D2D communication control unit 207, the message generation unit 208, the data processing unit 210, the scheduling unit 211, the symbol mapping unit 212, the multiplexing unit 213, the FFF unit 214, the frequency mapping unit 215 and the IFFT unit 216 in the second embodiment.

The CPU 251 outputs, for example, a control signal to the DSP 252, so that the DSP 252 may achieve each function from the FFT unit 203 to the message generation unit 208 and from the data processing unit 210 to the IFF unit 216. At that time, the DSP 252 and the CPU 251 access the RAM 250, so that may appropriately store data etc. also.

### REFERENCE SIGNS LIST

10: Radio communication system
100(100-1,100-2): Radio base station apparatus (base station)
101: Packet generation unit
102: MAC scheduling unit
103: Coding unit
104: Modulation unit
105: Multiplexing unit
106: IFFT unit
107: Radio processing unit
108: Antenna
110: Radio resource control unit
111: MAC control unit
115: Antenna
116: Radio processing unit
117: FFT unit
118: Demodulation unit
119: Decoding unit
120: MAC, RLC unit
150: RAM
151: CPU
152: DSP
200(200-1∼200-3): Terminal apparatus (Terminal)
201: Antenna
202: Radio processing unit
203: FFT Unit
204: Control channel demodulation unit
205: Demodulation unit
206: Control Information processing unit
207: D2D communication control unit
210: Data processing unit
211: Scheduling unit
212: Symbol Mapping unit
213: Multiplexing unit
214: FFT unit
215: Frequency mapping unit
216: IFFT Unit
217: Radio processing unit
250: RAM
251: CPU
252: DSP

## Claims

1. A radio communication system comprising:
a first and second radio base station apparatuses; and
a first to third terminal apparatuses, wherein
the first radio base station apparatus includes:
a radio resource control unit configured to allocate to the first terminal apparatus a second radio resource, in contrast to a first radio resource allocated when the first terminal apparatus performs first radio communication via the first radio base station apparatus, when the first terminal apparatus performs second radio communication with the second terminal apparatus not via the first radio base station apparatus, and
a first transmission unit configured to transmit allocation information of the second radio resource to the first terminal apparatus,
the first terminal apparatus includes a reception unit configured to receive the allocation information from the first radio base station apparatus, and
the second radio resource is same as or partially overlapped with a third radio resource allocated, by the second radio base station apparatus, when the third terminal apparatus performs the second radio communication.

2. The radio communication system according to claim 1, wherein
the radio resource control unit is configured to allocated to the first terminal apparatus a fourth radio resource in the first radio resource or in the second radio resource, when the first terminal apparatus performs the second radio communication outside of a communication range of the first radio base station apparatus,
the transmission unit is configured to transmit allocation information of the fourth radio resource to the first terminal apparatus, and
the reception unit is configured to receive the allocation information from the first radio base station apparatus.

3. The radio communication system according to claim 2, wherein
the fourth radio resource is same as or partially overlapped with a fifth radio resource allocated by the second radio base station apparatus when the third terminal apparatus performs the second radio communication outside of a communication range of the second radio base station apparatus.

4. The radio communication system according to claim 1, wherein the transmission unit is configured to transmit the allocation information to the first terminal apparatus by transmitting by broadcast the allocation information of the second radio resource as broadcast information.

5. The radio communication system according to claim 1, wherein the second radio resource is same as the third radio resource when the second terminal apparatus locates in a communication range of the second radio base station apparatus.

6. The radio communication system according to claim 1, wherein
the first terminal apparatus includes a second transmission unit configured to transmit a message to the second terminal apparatus by using the second radio resource, and
the message is a message to be transmitted and received in a collision avoidance procedure between the second radio communication and another the second radio communication.

7. The radio communication system according to claim 1, wherein
the radio resource control unit is configured to allocate the second radio resource to any frequency channel out of a plurality of frequency channels, and
the transmission unit is configured to transmit the allocation information included in identification information of the frequency channel allocated to the second radio resource out of the plurality of frequency channels.

8. The radio communication system according to claim 2, wherein
the radio resource control unit is configured to allocate the fourth radio resource to any frequency channel out of a plurality of frequency channels, and
the transmission unit is configured to transmit the allocation information included in identification information of the frequency channel allocated to the fourth radio resource out of the plurality of the frequency channels.

9. The radio communication system according to claim 1, wherein
the radio resource control unit is configured to allocate the second radio resource to each of a plurality of frequency channels, and
the transmission unit is configured to transmit the allocation information included in identification information of a frequency channel including a range allocated to the second radio resource when there is the frequency channel including the range different from a range in another frequency channel allocated to the second radio resource out of the plurality of frequency channels allocated to the second radio resource.

10. The radio communication system according to claim 1, wherein
the radio resource control unit is configured to allocate the fourth radio resource to each of a plurality of frequency channels, and
the transmission unit is configured to transmit the allocation information included in identification information of a frequency channel including a range allocated to the fourth radio resource when there is the frequency channel including the range different from a range in another frequency channel allocated to the fourth radio resource out of the plurality of frequency channels allocated to the fourth radio resource.

11. The radio communication system according to claim 1, wherein the radio resource control unit is configured to allocate the second radio resource to a radio resource to a first communication link from the first radio base station apparatus to the first terminal apparatus and a radio resource to a second communication link from the first terminal apparatus to the first radio base station apparatus.

12. The radio communication system according to claim 1, wherein the radio resource control unit changes a size of the second radio resource according to an amount of communication traffic of a terminal apparatus subordinate to the first radio base station apparatus.

13. The radio communication system according to claim 1, wherein
the first terminal apparatus includes:
a communication control unit configured to change transmission power of a radio signal transmitted to the second terminal apparatus, and
a second transmission unit configured to transmit the radio signal to the second terminal apparatus, and
the second transmission unit is configured to transmit the radio signal to the second terminal apparatus by the transmission power determined by the communication control unit.

14. The radio communication system according to claim 1, wherein
the radio resource control unit is configured to allocate to the first terminal apparatus located in distance within a threshold to the first radio base station apparatus, a radio resource not overlapped with the third radio resource out of the second radio resource, when the second radio resource overlaps a part of the third radio resource.

15. The radio communication system according to claim 14, wherein
the first terminal apparatus includes:
a communication control unit configured to change transmission power of a radio signal transmitted to the second terminal apparatus, and
a second transmission unit configured to transmit the radio signal to the second terminal apparatus, and
the second transmission unit is configured to transmit the radio signal to the second terminal apparatus by transmission power determined by the communication control unit and by using a radio resource not overlapped with the third radio resource.

16. The radio communication system according to claim 1, wherein the radio resource control unit is configured to allocate the second radio resource to a part of subframes out of a plurality of subframes allocated to the first radio resource when the radio resource control unit is configured to allocate the first radio resource to each of the plurality of subframes.

17. The radio communication system according to claim 1, wherein the radio resource control unit is configured to allocate the second radio frame to all subframes in the part of subframes allocated to the second radio frame.

18. A radio base station apparatus comprising:
a radio resource control unit configured to allocate to a first terminal apparatus to a second radio resource, in contrast to a first radio resource allocated when the first terminal apparatus performs first radio communication via the radio base station apparatus, when the first terminal apparatus performs second radio communication with the second terminal apparatus not via the radio base station apparatus; and
a transmission unit configured to transmit allocation information of the second radio resource to the first terminal apparatus, wherein
the second radio resource is same as or partially overlapped with a third radio resource allocated, by another radio base station apparatus, when a third terminal apparatus performs the second radio communication.

19. A terminal apparatus comprising:
a reception unit configured to receive resource information of an allocated second radio resource in contrast to a first radio resource allocated by the radio base station apparatus when the terminal apparatus performs first radio communication via the radio base station apparatus, when the terminal apparatus performs second radio communication with a first terminal apparatus not via the radio base station apparatus, wherein
the second radio resource is same as or partially overlapped with a third radio resource allocated, by another radio base station apparatus, when a second terminal apparatus performs the second radio communication.

20. A radio resource allocation method in a radio communication system including a first and second radio base station apparatuses and a first to third terminal apparatuses, the method comprising:
allocating to the first terminal apparatus a second radio resource, in contrast to a first radio resource allocated when the first terminal apparatus performs first radio communication via the first radio base station apparatus, when the first terminal apparatus performs second radio communication with the second terminal apparatus not via the first radio base station apparatus, by the first radio base station apparatus; and
transmitting allocation information of the second radio resource to the first terminal apparatus, by the first radio base station apparatus;
receiving the allocation information from the first radio base station apparatus, by the first terminal apparatus, wherein
the second radio resource is same as or partially overlapped with a third radio resource allocated, by the second radio base station apparatus, when the third terminal apparatus performs the second radio communication.
